# EUROPEAN PATENT APPLICATION

(11) **EP 3 372 652 A1**
(43) Date of publication of application: **12.09.2018**
(21) Application number: 17159579.6
(22) Date of filing: 07.03.2017
(51) Int. Cl.: C09K 3/10, C08G 18/75, C08G 18/79, C08G 18/32

(54) **WATER-SWELLABLE MOISTURE CURING ONE-COMPONENT POLYURETHANE SEALANT**

(71) Applicant: SIKA TECHNOLOGY AG, 6340 Baar (CH)
(72) Inventor: Schlumpf, Michael, 8143 Stallikon (CH)
(74) Representative: Sika Patent Attorneys

(57) **Abstract**

The invention relates to a one-component moisture curing compositions comprising at least one hydrophilic isocyanate-functional polyurethane polymer, at least one inorganic swelling agent selected from the group consisting of aluminum sulfate and magnesium sulfate, and at least one latent hardener. The invention is also related to a method for sealing and to a sealed article obtained by the use of the method.

## Description

### Technical field

The invention relates to a water-swellable moisture curing one-component polyurethane compositions and to a method for sealing construction joints against penetration of water.

### Background of the invention

Water-swellable profiles and sealants are known. In the field of construction, they are used in watertight concrete structures for sealing of construction joints in basements and other below ground water structures. Such materials are also used to waterproof connecting joints in diaphragm walls as well as in pipe and steel work penetrations through walls and floor slabs. When contacted with water, these materials build up a swelling pressure inside of the construction. During the swelling the sealing material exerts pressure on the surrounding surfaces and seals the joint against water penetration.

State-of-the-art water-swellable profiles and sealants comprise a hydrophobic thermoplastic component and/or inert filler material blended with inorganic or organic swelling agent. Suitable inorganic swelling components include for example water-absorbing clay minerals such as calcium bentonites. Organic swelling components consist mainly of water-swellable crosslinked polymers, which can be based on polyacrylates, such as superabsorbers, or polyurethane polymers. The water-swellable crosslinked polymers are water-insoluble but the polymer chains contain hydrophilic groups or hydrophilic segments, which are responsible for the water-absorbing properties.

The water-swellable sealants can also be provided as reactive systems based on prepolymers containing reactive groups. The curing of the prepolymers can be initiated, for example, by heating or exposing the composition to atmospheric moisture or water after the application of the sealant to the substrate to be sealed. Moisture curing systems typically contain isocyanate-functional polyurethane polymers obtained from reaction of polyols with stoichiometric excess of polyisocyanates. When contacted with water the residual isocyanate groups of the polyurethane prepolymers form carbamic acid, which is unstable and decomposes into an amine and carbon dioxide. The amine reacts rapidly with other isocyanate groups to form urea linkages. The polyurethane based moisture curing systems can be formulated as one-part or as two-part systems, also called one-component or two-component systems, respectively.

The polyurethane polymers used as organic swelling agent in a water-swellable sealant must be at least partially hydrophilic in order to enable swelling upon contact with water. Typical isocyanate-functional polyurethane polymers are hydrophobic but hydrophilicity of the polyurethane polymer chain can be increased, for example, by adding hydrophilic segments or hydrophilic groups to the prepolymers or by using special additives in combination with hydrophobic prepolymers. The degree of swelling depends on the hydrophilic-hydrophobic balance in the polyurethane prepolymer. The more hydrophilic the prepolymer, the greater the extent to which it swells upon contact with an aqueous solution. However, crosslinking of completely water-soluble polyurethane prepolymers results in formation of hydrogels, which is not desired. Water-swellable sealants based on the use of hydrophilic polyurethane prepolymers are disclosed in the State-of-the-Art, for example in European patent application EP 0831107A1.

Water-swellable sealants used for sealing of construction joints are subjected to certain requirements, which are related to the long term stability and swelling properties of these materials during their intended use. Generally, the sealants should maintain their consistency, mechanical stability and swelling capabilities during the consecutive swelling and drying cycles over time periods of several years. In particular, the sealant should be mechanically sufficiently stable to resist deformation and washing out of the sealant while being subjected to flowing water. The material should preferably also maintain its properties at elevated temperatures and high humidity conditions. Finally, the sealant should exhibit a certain swelling delay, which means that the material does not immediately absorb water but only after a certain period of time, such as 24 hours after having been contacted with it.

It is furthermore essential that the water-swellable sealant does not form hydrogel upon contact with water. Hydrogels are three-dimensional polymeric structures, which are capable of absorbing and retaining large quantities of water to form a stable structure. Typically, hydrogels are formed by polymerizing a hydrophilic monomer in an aqueous solution under conditions such that the prepolymer becomes crosslinked, forming a three-dimensional polymeric network which gels the solution. Polyurethane based hydrogels can be obtained, for example, by reaction of hydrophilic polyurethane prepolymers and a large excess of water. Hydrogels have a high water-absorption capacity but they are also soft and, therefore, easily washed away from open surfaces when exposed to environmental conditions. Consequently hydrogels are mainly used in the field of construction as injections materials for sealing cracks and closed cavities in concrete structures.

The State-of-the-art water-swellable sealants have certain disadvantages, which make them less suitable for sealing construction joints. Water-swellable sealants containing high amounts of inorganic absorbents are known to suffer from increased swelling and consequently increased swelling pressure over long time periods due to the irreversibility of the absorption process. In case the swelling pressure exceeds a certain limit, cracks in the concrete surrounding the joint are likely to occur. On the other hand water-swellable sealants based solely on the use of hydrophilic prepolymers are incapable of retaining the absorbed water after the sealant is not any more in contact with liquid. In dry conditions, the absorbed water will begin to drain from the sealant resulting in drying and eventual embrittlement of the sealant material. If the sealant contains plasticizers, the repeating absorption and desorption cycle can result in washing-off plasticizers and eventual degradation of concrete structures.

There is thus a need for an improved water-swellable sealant, which solves the problems of the prior art sealants.

### Summary of the invention

The object of the present invention is to provide a one-component moisture curing composition, which cures upon contact with atmospheric moisture forming a water-swellable sealant having good mechanical stability and swelling properties.

A still further objective is to provide a method for sealing construction joints against penetration of water.

It was surprisingly found that a one-component moisture curing composition containing at least one hydrophilic isocyanate-functional polyurethane polymer, at least one inorganic swelling agent and at least one latent hardener is able to solve the problems related to State-of-the-art water-swellable moisture curing sealants.

With the hydrophilic isocyanate-functional polyurethane polymer alone the water-swellable sealant would be able to absorb high amounts of water but it would also be prone to shrinkage in dry conditions. Without the use of hydrophilic polyurethane prepolymers the amount of the inorganic swelling agent would have to be significantly increased in order to have the same water-swelling performance as with the use of the hydrophilic polyurethane prepolymers. Since the absorbed water would also be permanently trapped in the inorganic absorbent, the swelling of the sealant would increase over time as well as the pressure exerted to the concrete structure surrounding the sealed joint.

The subject of the present invention is a one-component moisture curing composition as defined in claim 1.

One of the advantages of the one-component moisture curing composition of the present invention is that at least part of the water absorbed in the water-swellable sealant is not desorbed from the sealant in dry conditions. Consequently, the plasticizers and other soluble additives contained in the sealant are not washed away with the water flowing out of the sealant. In addition, the water-swellable sealant does not become brittle in dry conditions since part of the water is always retained in the inorganic swelling agent.

Furthermore, the latent hardener enables a bubble free curing since the isocyanate groups of the prepolymer do not react with water but with the reactive groups of the hardener and, therefore, the prepolymers are cured without the formation of carbon dioxide. It has also been found that the use of a latent hardener enables improved control of the curing reaction and production of sealants with the desired swelling delay.

Other aspects of the present invention are presented in other independent claims. Preferred aspects of the invention are presented in the dependent claims.

### Detailed description of the invention

The subject of the present invention is a one-component moisture curing composition comprising:
a) at least one hydrophilic isocyanate-functional polyurethane polymer and/or at least one hydrophilic polyisocyanate,
b) at least one inorganic swelling agent selected from the group consisting of aluminum sulfate and magnesium sulfate, and
c) at least one latent hardener.

In this document, the term "one-component moisture curing composition" or "one-part moisture curing composition" refers to compositions, which are contained in a single moisture-tight container, has certain storage stability and cures when exposed to moisture.

In this document, the term "latent hardener" refers to compounds containing at least two reactive groups, which are reactive towards isocyanate groups, the reactivity of which the at least two reactive groups is blocked and is activatable with moisture. The reactive groups of the latent hardener include all reactive groups, which show reactivity toward isocyanate groups after the activation with moisture.

In this document, the prefix "poly" in substance designations such as "polyol" or "polyisocyanate" refers to substances which in formal terms contain two or more per molecule of the functional group that occurs in their designation. A polyol, for example, is a compound having two or more hydroxyl groups, and a polyisocyanate is a compound having two or more isocyanate groups.

In this document the terms "ethylene oxide moiety", "ethylene oxide group" and "ethylene oxide unit" are used interchangeably, and refer to moieties of the formula (-CH₂-CH₂-O-), excluding such moieties that form part of a 1,2-propylene oxide moiety, described by the formula (-CH₂-CH(CH₃)-O-).

In this document, the term "polyurethane polymer" refers to polymers prepared by so called diisocyanate polyaddition process. Examples of polyurethane polymers are polyether polyurethanes, polyester polyurethanes, and polyisocyanurates.

The term polyurethane prepolymer" refers to polyurethane polymers comprising one or more unreacted isocyanate groups. The polyurethane prepolymers are obtained by reacting excess of polyisocyanates with polyols and they are polyisocyanates themselves. The terms "isocyanate-functional polyurethane polymer" and "polyurethane prepolymer" are used interchangeably.

In this document, the term "hydrophilic polymer" refers to a polymer having hydrophilic moieties which enable the polymer to be water soluble, miscible or capable of forming an emulsion or paste when mixed with water. The hydrophilic moieties can be referred to as hydrophilic segments, centers or functional groups depending on the nature of the hydrophilic moiety. Preferred hydrophilic moieties include ether functions and ionic groups.

In this document, the term "molecular weight" refers to the molar mass (g/mol) of a molecule or a part of a molecule, also referred to as "moiety". The term "average molecular weight" refers to number average molecular weight (Mₙ) of an oligomeric or polymeric mixture of molecules or moieties.

In this document, the term "hydroxyl functionality" refers to the average number of hydroxyl groups per molecule (per polymer chain) and is the number average molecular weight of a polyol divided by its hydroxyl equivalent weight.

In this document, the term "equivalent weight" refers to molecular weight divided by the respective functionality.

In this document, the term "shelf life stability" refers to the ability of a composition to be stored at room temperature in a suitable container under exclusion of moisture for a certain time interval, in particular several months, without undergoing significant changes in application or end-use properties.

In this document, an amine or an isocyanate is called "aliphatic" when its amine group or its isocyanate group, respectively, is directly bound to an aliphatic, cycloaliphatic or arylaliphatic moiety. The corresponding functional group is therefore called an aliphatic amine or an aliphatic isocyanate group, respectively.

In this document, an amine or an isocyanate is called "aromatic" when its amine group or its isocyanate group, respectively, is directly bound to an aromatic moiety. The corresponding functional group is therefore called an aromatic amine or an aromatic isocyanate group, respectively.

In this document, the term "primary amine group" refers to an NH₂-group bound to an organic moiety, and the term "secondary amine group" refers to a NH-group bound to two organic moieties which together may be part of a ring.

In this document, the term "room temperature" refers to a temperature of ca. 23 °C.

A dashed line in the chemical formulas of this document represents the bonding between a moiety and the corresponding rest of the molecule.

The one-component moisture curing composition of the present invention comprises at least one hydrophilic isocyanate-functional polyurethane polymer.

A suitable hydrophilic isocyanate-functional polyurethane polymer is any hydrophilic reaction product, which may be obtained from the reaction of at least one polyisocyanate with at least one polyol, whereby the isocyanate groups are in stoichiometric excess over hydroxyl groups. The reaction can be carried out via known methods, preferably at temperatures of between 50 and 100 °C, optionally in the presence of a catalyst. Preferably, the polyisocyanate is used in such an amount that the ratio of the isocyanate groups to hydroxyl groups in the reaction mixture is in the range of 1.2 to 3.0, more preferably of 1.5 to 3.0. The polyisocyanate and the polyol may optionally be reacted in the presence of a plasticizer and/or a solvent, which are free from isocyanate-reactive groups.

Preferably, the hydrophilic isocyanate-functional polyurethane polymer has a free NCO-group content in the range of 0.5 to 10.0 % by weight, more preferably of 1.0 to 5.0 % by weight.

Preferably, the hydrophilic isocyanate-functional polyurethane polymer has an average molecular weight in the range from 1,000 to 20,000 g/mol, more preferably in the range from 2,000 to 10,000 g/mol.

Preferably the hydrophilic isocyanate-functional polyurethane polymer has an average isocyanate functionality in the range of 1.5 to 3.0, more preferably of 1.6 to 2.5.

Preferably, the at least one hydrophilic isocyanate-functional polyurethane polymer has a content of ethylene oxide units of at least 30 % by weight, preferably at least 40 % by weight, more preferably at least 50 % by weight, based on the weight of the polyurethane polymer.

Preferably the at least one hydrophilic isocyanate-functional polyurethane polymer is present in an amount of 5 - 90 % by weight, preferably 10 - 80 % by weight, preferably 20 - 50 % by weight, based on the total weight of the one-component moisture curing composition.

The hydrophilic isocyanate-functional polyurethane polymers can be obtained, for example, from reaction of polyisocyanates with hydrophilic polyols or from reaction of hydrophilic polyisocyanates with polyols.

Suitable hydrophilic polyols include, for example, polyether polyols, particularly polyoxyalkylenepolyols having a carbon to oxygen ratio of not more than 4:1, preferably not more than 3:1, more preferably in the range of 3:1 to 1.5:1.

Polyoxyalkylenepolyols are products of the polymerziation of ethylene oxide, 1,2-propylene oxide, 1,2- or 2,3-butylene oxide, oxetane, tetrahydrofuran or mixtures thereof, optionally polymerized using a starter molecule with two or more active hydrogen atoms, such as water, ammonia or compounds with several OH- or NH-groups, such as 1,2-ethanediol, 1,2- and 1,3-propanediol, neopentylglycol, diethyleneglycol, triethyleneglycol, the isomeric dipropyleneglycols and tripropyleneglycols, the isomeric butanediols, pentanediols, hexanediols, heptanediols, octanediols, nonanediols, decanediols, undecanediols, 1,3- and 1,4-cyclohexanedimethanol, bisphenol A, hydrogenated bisphenol A, 1,1,1-trimethylolethane, 1,1,1-trimethylolpropane, glycerol, aniline, as well as mixtures of the above-mentioned compounds.

The hydrophilic polyols can have an average molecular weight in the range from 200 to 15,000 g/mol, preferably from 500 to 10,000 g/mol, most preferably from 500 to 7,500 g/mol.

Preferred are both polyoxyalkylenepolyols with a low degree of unsaturation (measured according to ASTM D-2849-69 and indicated in milliequivalents of unsaturation per gram of polyol (meq/g)), obtainable, for example, by using so-called double metal cyanide complex catalysts (DMC catalysts), and polyoxyalkylenepolyols with a higher degree of unsaturation, obtainable, for example, by using anionic catalysts such as NaOH, KOH, CsOH or alkali alcoholates.

Particularly preferred polyoxyalkylenepolyols are polymerization products of ethylene oxide with and without other alkylene oxides.

Preferably, the hydrophilic polyol, in particular hydrophilic polyoxyalkylenepolyol, has a content of ethylene oxide units of at least 25 % by weight, preferably at least 30 % by weight, most preferably at least 40 % by weight, based on the weight of the polyol. In particular, preferred hydrophilic polyols have an average hydroxyl functionality of at least 1.5, preferably between 1.6 and 10, more preferably between 1.7 and 6 and a content of ethylene oxide units of at least 25 % by weight, preferably at least 30 % by weight, most preferably at least 40 % by weight, based on the weight of the polyol.

Example of suitable hydrophilic polyether polyols include polyether diols and triols, for example, polyethylene glycol (PEG), polyethylene glycol polypropylene glycol copolymers (PEG/PPG), in particular PEG/PPG block copolymers. Further examples of suitable hydrophilic polyether polyols include so-called ethylene oxide end-capped polyoxypropylenepolyols. The latter are specific polyoxypropylene-polyoxyethylenepolyols obtainable by post-ethoxylating pure polyoxypropylenepolyols, thus featuring primary hydroxyl groups. Polyether monools such as methoxypolyethylene glycol (MPEG) and methoxypolyethylene glycol methoxypolypropylene glycol copolymers (MPEG/MPPG), in particular MPEG/MPPG block copolymers, can also be used in combination with the aforementioned polyether diols and triols.

Examples of suitable hydrophilic isocyanate-functional polyurethane polymers obtained from reaction of polyisocyanates with hydrophilic polyols and preparation method thereof are disclosed, for example, in US 20060142529 A1. Suitable hydrophilic isocyanate-functional polyurethane polymers based on MDI and TDI polyisocyanates are commercially available, for example, under the trade name of Hypol® (from Dow Chemical).

Suitable polyisocyanates for the preparation of hydrophilic isocyanate-functional polyurethane polymers include:
- Aliphatic polyisocyanates, particularly 1,4-tetramethylene diisocyanate, 2-methylpentamethylene-1,5-diisocyanate, 1,6-hexanediisocyanate (HDI), 2,2,4- and 2,4,4-trimethyl-1,6-hexanediisocyanate (TMDI), 1,10-decanediisocyanate, 1,12-dodecanediisocyanate, lysine or lysine ester diisocyanate, cyclohexane-1,3- and -1,4-diisocyanate, 1-methyl-2,4- and -2,6-diisocyanatocyclohexane and any mixtures of these isomers (H6TDI), 1-isocyanato-3,3,5-trimethyl-5-isocyanatomethyl-cyclohexane (isophoronediisocyanate or IPDI), perhydro-2,4'- and -4,4'-diphenylmethane diisocyanate (H12MDI), 1,4-diisocyanato-2,2,6-trimethylcyclohexane (TMCDI), 1,3- and 1,4-bis-(isocyanatomethyl)cyclohexane, m- and p-xylylene diisocyanate (m- and p-XDI), m- and p-tetramethyl-1,4-xylylene diisocyanate (m- and p-TMXDI), bis-(1-isocyanato-1-methylethyl)naphthalene, dimer or trimer fatty acid isocyanates, such as 3,6-bis-(9-isocyanatononyl)-4,5-di-(1-heptenyl)cyclohexene (dimeryl diisocyanate), and α,α, α ', α ', α ", α "-hexamethyl-1,3,5-mesitylene triisocyanate. Preferred thereof are HDI, TMDI, IPDI and H12MDI, in particular HDI amd IPDI, most preferred is IPDI.
- Aromatic polyisocyanates, particularly 4,4'-diphenylmethane diisocyanate, 2,4'-diphenylmethane diisocyanate and/or 2,2'-diphenylmethane diisocyanate and any mixtures of these isomers (MDI), 2,4- and/or 2,6-toluylene diisocyanate and any mixtures of these isomers (TDI), 1,3- and 1,4-phenylene diisocyanate, 2,3,5,6-tetramethyl-1,4-diisocyanatobenzene, naphthalene-1,5-diisocyanate (NDI), 3,3'-dimethyl-4,4'-diisocyanatodiphenyl (TODI), di-anisidine diisocyanate (DADI), 1,3,5-tris-(isocyanatomethyl)benzene, tris-(4-isocyanatophenyl)methane and tris-(4-isocyanatophenyl)thiophosphate. Preferred thereof are MDI and TDI.

It can be advantageous to use mixtures of MDI with oligomers or polymers or derivatives of MDI, preferably so-called modified MDI containing carbodiimides or uretonimines of MDI, which are commercially available, for example, as Desmodur® CD (from Covestro), Lupranate® MM 103 (from BASF) or Isonate® M 143 and Isonate® M 309 (from Dow), as well as so-called polymeric MDI or PMDI representing mixtures of MDI with homologues of MDI, preferably with a low content of MDI homologues, such as Desmodur® VL50 (from Covestro) and Voranate® M 2940 (from Dow). A particularly preferred form of MDI is an MDI isomer mixture comprising 4,4'-diphenylmethane diisocyanate and 2,4'-diphenylmethane diisocyanate in about equal amounts, commercially available for example as Desmodur® 2424 (from Covestro) or Lupranate® MI (from BASF).

Preferably, the hydrophilic isocyanate-functional polyurethane polymer is obtained from reaction of at least one polyisocyanate and at least one hydrophilic polyether polyol, preferably a hydrophilic polyoxyalkylenepolyol, having a content of ethylene oxide units of at least 25 % by weight, preferably at least 30 % by weight, most preferably at least 40 % by weight, based on the weight of the polyol and having an average molecular weight of at least 500 g/mol, preferably between 500 and 10,000 g/mol. These hydrophilic isocyanate-functional polyurethane polymers are semi-solid at normal room temperature and they become liquid at temperature of 50 °C or above.

Water-swellable sealants obtained upon curing one-compositions containing hydrophilic isocyanate-functional prepolymers prepared from polyisocyanates and hydrophilic polyols having a content of ethylene oxide units and average molecular weight in the above cited ranges have been found to have excellent swelling properties without the use of excessive amounts of inorganic swelling agents. Furthermore, such water-swellable sealants have shown decreased shrinkage and good mechanical stability.

More preferably, the hydrophilic isocyanate-functional polyurethane polymer is obtained from the reaction of at least one polyisocyanate and at least one hydrophilic polyoxyalkylenepolyol having a content of ethylene oxide units of at least 25 % by weight, preferably at least 30 % by weight, most preferably at least 40 % by weight, based on the weight of the polyol and selected from the group consisting of polyethylene glycol (PEG), polyethylene glycol polypropylene glycol copolymers (PEG/PPG), and ethylene oxide end-capped polyoxypropylenepolyols.

Suitable hydrophilic isocyanate-functional polyurethane polymers can also be obtained by reacting an excess of hydrophilic polyisocyanates with polyols.

Hydrophilic polyisocyanates can be obtained, for example, by modification of hydrophobic polyisocyanates with carboxylate, sulfonate and/or polyethylene oxide and/or polyethylene oxide/polypropylene oxide groups. The preparation of such hydrophilic polyisocyanates is described, for example, in EP 0540985 A. The hydrophilic polyisocyanates containing allophanate groups and prepared by reacting polyisocyanates having an average isocyanate functionality of 2 to 5 with monofunctional polyalkylene oxide polyether alcohols as disclosed in EP 0959087 A, are also suitable.

Preferably, the hydrophilic polyisocyanate has an average molecular weight in the range from 250 to 5,000 g/mol, more preferably in the range from 350 to 2,000 g/mol and a carbon to oxygen ratio of not more than 4:1, preferably not more than 3:1, more preferably in the range from 3:1 to 1.5:1.

Preferred hydrophilic polyisocyanates include aliphatic and aromatic, in particular aliphatic, polyisocyanates containing polyoxyalkylene groups, in particular polyoxyethylene or mixed polyoxyethylene polyoxypropylene groups. Preferred thereof are hydrophilic polyisocyanates having a content of ethylene oxide units of at least 5 % by weight, more preferably at least 10 % by weight, even more preferably at least 15 % by weigh, most preferably at least 20 % by weight, based on the weight of the hydrophilic polyisocyanate. In particular, preferred hydrophilic polyisocyanates have a content of ethylene oxide units of at least 5 % by weight, preferably at least 10 % by weight, based on the weight of the hydrophilic polyisocyanate, an average molecular weight in the range from 250 to 5,000 g/mol, more preferably in the range from 350 to 2,000 g/mol and an isocyanate functionality of at least 1.5, preferably from 1.6 to 3.0.

Especially suitable hydrophilic polyisocyanates can be obtained, for example, by hydrophilic modification of bis(4-isocyanatocyclohexyl)methane (H₁₂MDI), 1,6-diisocyanatohexane (HDI), and 1-isocyanato-5-isocyanatomethyl-3,3,5-trimethylcyclohexane (IPDI) with monohydroxy-functional polyethylene glycols or aminosulfonic acid sodium salts.

Suitable hydrophilic polyisocyanates are commercially available, for example, as Vestanat® EP-HP 2333 (from Evonik); under the trade name of Basonat® (from BASF), such as Basonat® HW 1000, Basonat® HW 2000, and Basonat® P LR 8878; under the trade name of Bayhydur® (from Covestro), such as Bayhydur® N 3100, Bayhydur® VP LS 2150 BA, Bayhydur® VP LS 2306, Bayhydur® VP LS 2319, Bayhydur® VP LS 2336, Bayhydur® XP 2451, Bayhydur® XP 2487, Bayhydur® XP 2547, Bayhydur® XP 2570, Bayhydur® XP 2655 and Bayhydur® XP 7165; under the trade name of Desmodur® (from Covestro), such as Desmodur® DA-L, Desmodur® D XP, Desmodur DN; and under the trade name of Rhodocoat® (from Perstorp), such as Rhodocoat® X EZ-M 501 and Rhodocoat® X EZ-M 501, Rhodocoat® X EZ-M 502, and Rhodocoat® X EZ-D 401.

Suitable polyols to be used in combination with hydrophilic polyisocyanates for the preparation of the hydrophilic polyisocyanate-functional polyurethane polymers are polyether polyols, including those containing dispersed styrene-acrylonitrile (SAN), acrylonitrile-methylmethacrylate, or urea particles, further polyester polyols such as products of the polycondensation reaction of diols or triols with lactones or dicarboxylic acids or their esters or anhydrides, further polycarbonate polyols, block copolymer polyols with at least two different blocks of polyether, polyester or polycarbonate units, polyacrylate and polymethacrylate polyols, polyhydroxy-functional fats and oils, especially natural fats and oils, and polyhydrocarbon polyols, such as polyhydroxy-functional polyolefins.

Preferred polyols to be used in combination with hydrophilic polyisocyanates are polyether polyols, polyester polyols, polycarbonate polyols and polyacrylate polyols, in particular diols and triols with an average molecular weight in the range of 500 to 10,000 g/mol, particularly in the range of 1,000 to 5,000 g/mol. Particularly preferred thereof are polyether polyols, particularly polyoxyalkylenepolyols, such as polyoxypropylenepolyols and so-called ethylene oxide endcapped polyoxypropylenepolyols.

Particularly preferred are polyoxypropylenediols and -triols and ethylene oxide endcapped polyoxypropylenediols and -triols with an average molecular weight in the range of 500 to 6,000 g/mol, particularly in the range of 1,000 to 5,000 g/mol.

Further particularly preferred polyols are polycarbonate polyols, particularly products of the polycondensation of dialkyl carbonates, diaryl carbonates or phosgene with diols or triols such as ethylene glycol, diethylene glycol, propylene glycol, dipropylene glycol, neopentyl glycol, 1,4-butanediol, 1,5-pentanediol, 3-methyl-1,5-hexanediol, 1,6-hexanediol, 1,8-octanediol, 1,10-decanediol, 1,12-dodecanediol, 1,12-octadecanediol, 1,4-cyclohexane dimethanol, dimeric fatty acid diol (dimeryl diol), hydroxypivalic neopentylglycol ester, glycerol and 1,1,1-trimethylolpropane.

Along with the above-mentioned polyols, small amounts of low molecular weight divalent or multivalent alcohols can be used, such as 1,2-ethanediol, 1,2-propanediol, neopentyl glycol, dibromoneopentyl glycol, diethylene glycol, triethylene glycol, the isomeric dipropylene glycols and tripropylene glycols, the isomeric butanediols, pentanediols, hexanediols, heptanediols, octanediols, nonanediols, decanediols, undecanediols, 1,3- and 1,4-cyclohexanedimethanol, hydrogenated bisphenol A, dimer fatty alcohols, 1,1,1-trimethylolethane, 1,1,1-trimethylolpropane, glycerol, pentaerythritol, sugar alcohols, such as xylitol, sorbitol or mannitol, sugars, such as saccharose, other polyhydric alcohols, low molecular weight alkoxylation products of the above-mentioned divalent or multivalent alcohols, as well as mixtures of the above-mentioned alcohols.

Hydrophilic isocyanate-functional polyurethane polymers can also be obtained from reaction of polyisocyanates with polyols and hydrophilicizing agents. Suitable hydrophilicizing agents include isocyanate-reactive, anionic or potentially anionic hydrophilicizing agents containing NCO-reactive group such as amino, hydroxyl or thiol group and also at least one functionality such as for example -COO⁻ M⁺, or -SO₃⁻ M⁺, or -PO₃²⁻ M⁺, as anionic groups or their wholly or partly protonated acidic forms as potentially anionic groups, wherein M⁺ is for example a metal cation, H⁺, NH₄⁺, NHR₃⁺, where R in each occurrence may be C₁-C₁₂ alkyl, C₅-C₆ cycloalkyl and/or C₂-C₄ hydroxyalkyl. The functionality interacts with aqueous media by entering a pH-dependent dissociative equilibrium and thereby can have a negative or neutral charge. Suitable anionically or potentially anionically hydrophilicizing compounds are mono- and dihydroxycarboxylic acids, mono- and dihydroxysulfonic acids, and also mono- and dihydroxyphosphonic acids and salts thereof. Examples of such anionic or potentially anionic hydrophilicizing agents are dimethylolpropionic acid, dimethylolbutyric acid, hydroxypivalic acid, malic acid, citric acid, glycolic acid, lactic acid and the propoxylated adduct formed from 2-butenediol and NaHSO₃, as described in DE 2446440 A.

Preferably, the one-component moisture curing composition further comprises at least one hydrophobic isocyanate-functional polyurethane polymer.

Suitable hydrophobic isocyanate-functional polyurethane polymers are obtainable by reacting excess of polyisocyanates with polyols. Any of the polyols and polyisocyanates as described above can be used for the preparation of the hydrophobic isocyanate-functional polyurethane polymers.

Preferably, the hydrophobic isocyanate-functional polyurethane polymer has a content of ethylene oxide units of not more than 10 % by weight, more preferably not more than 5 % by weight, based on the weight of the polyurethane polymer. Most preferably, the hydrophobic isocyanate-functional polyurethane polymer is free of ethylene oxide units.

Preferably, the hydrophobic isocyanate-functional polyurethane polymer has a free NCO-group content in the range of 0.5 to 10.0 % by weight, more preferably of 1.0 to 5.0 % by weight.

Preferably, the hydrophobic isocyanate-functional polyurethane polymer has an average molecular weight in the range of 1,000 to 20,000 g/mol, more preferably in the range of 2,000 to 10,000 g/mol.

Preferably the hydrophobic isocyanate-functional polyurethane polymer has an average isocyanate functionality in the range of 1.5 to 3.0, more preferably of 1.6 to 2.5.

Preferably the at least one hydrophobic isocyanate-functional polyurethane polymer is present in an amount of 10 - 90 % by weight, preferably 30 - 80 % by weight, preferably 50 - 70 % by weight, based on the total weight of the one-component moisture curing composition.

The one-component composition may further comprise at least one hydrophilic polyisocyanate. Suitable hydrophilic polyisocyanates have been described above related to the preparation of hydrophilic isocyanate-functional polyurethane polymers. Preferably, the hydrophilic polyisocyanate has a content of ethylene oxide units of at least 10 % by weight, more preferably at least 15 % by weight, even more preferably at least 20 % by weight, based on the weight of the hydrophilic polyisocyanate.

Preferably, the hydrophilic polyisocyanate has an average molecular weight of in the range from 250 to 5,000 g/mol, preferably from 350 to 2,000 g/mol. When used in combination with the hydrophobic isocyanate-functional polyurethane polymers, the at least one hydrophilic polyisocyanate may be present in the one-component composition as a crosslinking agent.

Preferably, the sum of the amount of the at least one hydrophobic isocyanate-functional polyurethane polymer and the amount of the at least one hydrophilic polyisocyanate is 20.0 - 90.0 % by weight, more preferably 30.0 - 80.0 % by weight, most preferably 35.0 - 75.0 % by weight, based on the total weight of the one-component moisture curing composition.

Preferably, the at least one inorganic swelling agent is present in the one-component moisture curing composition in an amount in the range of 0.5 - 35.0 % by weight, more preferably 2.5 - 30.0 % by weight, even more preferably 5.0 - 27.5 % by weight, most preferably 5.0 - 20.0 % by weight, based on the total weight of the one-component composition.

Preferably, the median particle size d₅₀ of the inorganic swelling agent is not more than 100 µm, more preferably not more than 50 µm, most preferably not more than 25 µm. In particular, the median particle size d₅₀ of the inorganic swelling agent can be in the range of 0.5 - 100.0 µm, preferably 0.5 - 50.0 µm, more preferably 1.0 - 25.0 µm, most preferably 1.0 - 10.0 µm.

The term median particle size d₅₀ refers in this document to a particle size below which 50 % of all particles by volume are smaller than the d₅₀ value. The term "particle size" refers in this document to the area-equivalent spherical diameter of a particle. The particle size distribution can be measured by laser diffraction according to the method as described in standard ISO 13320:2009. A Mastersizer 2000 device (trademark of Malvern Instruments Ltd, GB) can be used in measuring particle size distribution.

The one-component moisture curing composition of the present invention further comprises at least one latent hardener selected from the group consisting of aldimines, ketimines, and oxazolidines. The use of the latent hardener in the one-component composition enables bubble-free curing, i.e. curing without the release of significant amount of carbon dioxide. More importantly, the latent hardener can be used to control the speed of the curing reaction without the use of catalysts.

Preferably, the latent hardener is a blocked amine comprising at least two blocked hydrolytically activatable amine groups. Such blocked amines are commonly known as latent hardeners used in mixture comprising isocyanate groups. The blocked amines are obtained from reaction of at least one primary polyamine with at least one ketone or aldehyde.

Particularly suitable ketones include acetone, methyl ethyl ketone, methylpropyl ketone, methyl isopropyl ketone, methyl isobutyl ketone, methyl pentyl ketone, methyl isopentyl ketone, diethyl ketone, dipropyl ketone, diisopropyl ketone, dibutyl ketone, diisobutyl ketone, cyclopentanone, cyclohexanone and actetophenone.

Particularly suitable aldehydes include formaldehyde, acetaldehyde, propanal, 2-methylpropanal, butanal, 2-methylbutanal, 2-ethylbutanal, pentanal, 2-methylpentanal, 3-methylpentanal, 4-methylpentanal, 2,3-dimethylpentanal, hexanal, 2-ethylhexanal, heptanal, octanal, nonanal, decanal, undecanal, 2-methylundecanal, dodecanal, methoxy acetaldehyde, cyclopropane carboxaldehyde, cyclopentane carboxaldehyde, cyclohexane carboxaldehyde; 2,2-dimethyl-3-phenylpropanal, 1-naphthaldehyde, benzaldehyde or substituted benzaldehydes.

Particularly suitable aldehydes also include tertiary aldehydes, such as 2,2-dimethylpropanal (pivalaldehyde), 2,2-dimethyl-3-phenylpropanal, 2,2-dimethyl-3-acetoxypropanal, 2,2-dimethyl-3-isobutyroxypropanal, 2,2-dimethyl-3-caproyloxypropanal, 2,2-dimethyl-3-benzoyloxypropanal, 2,2-dimethyl-3-capryloyloxypropanal, 2,2-dimethyl-3-caprino-yloxypropanal, 2,2-dimethyl-3-lauroyloxypropanal, 2,2-dimethyl-3-myristoyl-oxypropanal, 2,2-dimethyl-3-palmitoyloxypropanal, 2,2-dimethyl-3-stearoyloxy-propanal, 2,2-dimethyl-3-dimethylaminopropanal, 2,2-dimethyl-3-diethylamino-propanal, 2,2-dimethyl-3-dibutylaminopropanal, 2,2-dimethyl-3-(N-pyrrolidino)-propanal, 2,2-dimethyl-3-(N-piperidino)propanal, 2,2-dimethyl-3-(N-morpholino)propanal, 2,2-dimethyl-3-(N-(2,6-dimethyl)morpholino)propanal, 2,2-di-methyl-3-(N-(4-methylpiperazino))propanal, 2,2-dimethyl-3-(N-(4-ethylpipera-zino))propanal, 2,2-dimethyl-3-(N-benzylmethylamino)propanal, 2,2-dimethyl-3-(N-benzylisopropylamino)propanal, 2,2-dimethyl-3-(N-methylcyclohexylamino)propanal, 2,2-dimethyl-3-bis-(2-methoxyethyl)aminopropanal, 2,2-dimethyl-3-bis(2-hydroxyethyl)aminopropanal or 2,2-dimethyl-3-bis(2-hydroxypropyl)-aminopropanal.

Suitable amines for the preparation of the blocked amine hardener include all primary polyamines containing at least two primary amine groups.

Preferably the at least one latent hardener is an aldimine containing two or three blocked amine groups. These latent hardeners can be mixed with isocyanate-functional polyurethane polymers to provide shelf-stable compositions.

More preferably, the latent hardener is a hydrophobic aldimine of formula (I); 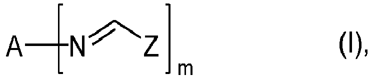 wherein
m is 2 or 3,
A is a divalent or trivalent hydrocarbon moiety having an average molecular weight in the range from 200 to 10,000 g/mol, optionally containing ether groups,
Z is a substituted or non-substituted aromatic moiety or is a moiety of formula 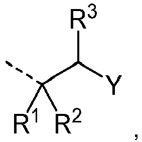
wherein R¹ and R² independently of one another are each a monovalent hydrocarbon moiety having 1 to 12 C atoms, or
together form a divalent hydrocarbon moiety having 4 to 12 C atoms, which is part of an unsubstituted or substituted carbocyclic ring having 5 to 8 C atoms, preferably 6, C atoms, and
R³ is a hydrogen atom or an alkyl- or arylalkyl- or alkoxycarbonyl moiety having 1 to 12 C atoms; and
Y is a monovalent moiety of formulae 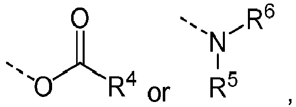
wherein R⁴ is a hydrogen or a monovalent hydrocarbon moiety having 1 to 20 carbon atoms optionally containing ether, carbonyl or ester groups, and R⁵ and R⁶ independently of one another are each a monovalent aliphatic, cycloaliphatic, or arylaliphatic hydrocarbon moiety having 1 to 20 C atoms optionally containing heteroatoms in the form of hydroxyl group or ether oxygen, or
together form a divalent hydrocarbon moiety having 4 to 12 C atoms, which is part of a 5- to 8-membered substituted or non-substituted heterocyclic ring which, in addition to the nitrogen atom may optionally contain other heteroatoms in the form of an ether oxygen, thioether sulphur or tertiary amine nitrogen.

Water-swellable sealants obtained upon curing of one-component compositions comprising at least one hydrophilic isocyanate-functional polyurethane polymer and hydrophobic aldimines of formula (I) have been found to have excellent swelling properties, decreased shrinkage and good mechanical stability.

According to one or more preferred embodiments, Z is a moiety of formula 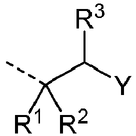 , wherein R¹ and R² are methyl moieties, R³ is a hydrogen, and Y is a moiety of formula 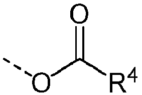 , wherein R⁴ is a hydrogen or a C₁ to C₂₀ alkyl, most preferably a methyl or a C₁₁ alkyl.

According to one or more preferred embodiments, Y is a moiety of formula 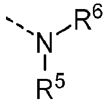 , wherein R⁵ and R⁶ independently of one another are each a monovalent aliphatic, cycloaliphatic, or arylaliphatic hydrocarbon moiety having 1 to 20 C atoms optionally containing heteroatoms in the form of hydroxyl group or ether oxygen, or
together form a divalent hydrocarbon moiety having 4 to 8 C atoms which is part of a 5- to 8-membered substituted or non-substituted heterocyclic ring which, in addition to the nitrogen atom may optionally contain other heteroatoms in the form of an ether oxygen or thioether sulphur or tertiary amine nitrogen.

More preferably, R⁵ and R⁶ are each a methoxyethyl group or form together a 3-oxa-1,5-pentylene moiety, which together with the nitrogen atom form a morpholine or a 2,6-dimethylmorpholine ring.

Most preferably R⁵ and R⁶ form a morpholine ring together with the nitrogen atom.

Preferably, R⁴ is a C₁ to C₁₁ alkyl, most preferably a methyl or a C₁₁ alkyl.

Particularly preferred are hydrophobic aldimines of the formula (I) wherein R¹ and R² are methyl, R³ is hydrogen and R⁵ and R⁶ form a morpholine ring together with the nitrogen atom.

Particularly preferred are further hydrophobic aldimines of the formula (I) wherein R¹ and R² are methyl, R³ is hydrogen and R⁴ is a methyl or a C₁₁ alkyl.

Preferably, A is a two or three valent hydrocarbon moiety having an average molecular weight of 200 to 6,000 g/mol and having a carbon to oxygen ratio of at least 4:1, preferably at least 5:1.

According to one or more preferred embodiments, A is a two or three valent polyoxyalkylene moiety having an average molecular weight of 200 to 6,000 g/mol and having a content of ethylene oxide units of not more than 35 % by weight, more preferably not more than 30 % by weight, most preferably not more than 20 % by weight, based on the weight of A.

Preferably, the hydrophobic aldimine of formula (I) has a content of ethylene oxide unit of not more than 25 % by weight, more preferably not more than 15 % by weight, most preferably not more than 10 % by weight, based on the weight of the hydrophobic aldimine.

The hydrophilic aldimines of the formula (I) are preferably available from a condensation reaction of at least one primary polyamine of the formula (IV) and at least one aldehyde of the formula (V).

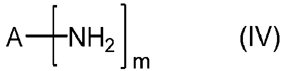

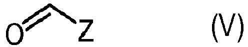

In the formulae (IV) and (V), m, A and Z have the already mentioned meanings.

For the condensation reaction, the aldehyde is used stoichiometrically or in excess related to the primary amino groups of the primary polyamine. The reaction can advantageously be conducted at a temperature in the range between 15 and 120 °C, either in the presence of a solvent or without a solvent. The released water is being removed either azeotropically with a suitable solvent, or directly under vacuum.

Suitable amines of the formula (IV) are:
- Aliphatic, cycloaliphatic, or arylaliphatic diamines, in particular 1,2-ethanediamine, 1,2-propane diamine, 1,3-propanediamine, 2,2-dimethyl-1,3-propanediamine, 1,3-butanediamine, 1,4-butanediamine, 1,3-pentanediamine (DAMP), 1,5-pentanediamine, 1,5-diamino-2-methylpentane (MPMD), 2-butyl-2-ethyl-1,5-pentanediamine (C11-neodiamine),1,6-hexanediamine, 2,5-dimethyl-1,6-hexanediamine, 2,2(4),4-trimethylhexamethylenediamine (TMD), 1,7-heptanediamine, 1,8-octanediamine, 4-aminomethyl-1,8-octanediamine, 1,11-undecanediamine, 1,12-dodecanediamine, 1,2-,1,3- and 1,4-diaminocyclohexane, 1-amino-3-aminomethyl-3,5,5-trimethylcyclohexane (isophorondiamine), 4(2)-methyl-1,3-diaminocyclohexane, 1,3-bis(aminomethyl)cyclohexane, 1,4-bis(aminomethyl)cyclohexane, bis(4-aminocyclohexyl)methane, bis(4-amino-3-methylcyclohexyl)methane, 2,5(2,6)-bis(aminomethyl)bicyclo[2.2.1]heptane (NBDA), 3(4),8(9)-bis-(aminomethyl)tricyclo[5.2.1.0^{2,6}]decane, 1,4-diamino-2,2,6-trimethylcyclohexane (TMCDA), 1,3-bis(aminomethyl)benzene, 1,4-bis(aminomethyl)benzene;
- Aromatic diamines, in particular 1,3- or 1,4-phenylenediamine, 2,4(6)-toluylene diamine, and 4,4'-, 2,4'- and 2,2'-diaminodiphenylmethane;
- Ether group containing aliphatic diamines, in particular bis(2-aminoethyl)ether, 3,6-dioxaoctane-1,8-diamine, 4,7-dioxadecane-1,10-diamine, 4,7-dioxadecane-2,9-diamine, 4,9-dioxadodecane-1,12-diamine, 5,8-dioxadodecane-3,10-diamine, 4,7,10-trioxatridecane-1,13-diamine and higher oligomers of these diamines as well as polyoxyalkylenedi- and triamines having a molecular weight up to 6,000 g/mol, in particular the ones, which are commercially available from Huntsman as Jeffamine® D-230, D-400, D-2000, D-4000, T-403 and T-5000 as well as the similar compounds available from BASF or Nitroil;

Suitable aldehydes of the formula (V) are formaldehyde, acetaldehyde, propanal, 2-methylpropanal, butanal, 2-methylbutanal, 2-ethylbutanal, pentanal, 2-methylpentanal, 3-methylpentanal, 4-methylpentanal, 2,3-dimethylpentanal, hexanal, 2-ethylhexanal, heptanal, octanal, nonanal, decanal, undecanal, 2-methylundecanal, dodecanal, methoxy acetaldehyde, cyclopropane carboxaldehyde, cyclopentane carboxaldehyde, cyclohexane carboxaldehyde; 2,2-dimethyl-3-phenylpropanal, 1-naphthaldehyde, benzaldehyde or substituted benzaldehydes, in particular benzaldehydes substituted with alkyl groups, in particular alkyl groups having 10 to 14 C atoms.

Particularly suitable aldehydes of the formula (V) are isobutyraldehyde, 2-ethylhexanal, pivalaldehyde, 2,2-diethylbutanal, benzaldehyde, 2,2-dimethyl-3-(N,N-bis(methoxyethyl))amino-propanal, 2,2-dimethyl-3-(N-morpholino)-propanal, 2,2-dimethyl-3-(N-(2,6-dimethyl)morpholino)-propanal, 2,2-dimethyl-3-acetoxypropanal, and 2,2-dimethyl-3-lauroyloxypropanal.

Preferred thereof are benzaldehyde, alkyl benzaldehydes, 2,2-dimethyl-3-(N,N-bis(methoxyethyl))amino-propanal, 2,2-dimethyl-3-(N-morpholino)-propanal, 2,2-dimethyl-3-(N-(2,6-dimethyl)morpholino)-propanal, 2,2-dimethyl-3-acetoxypropanal, and 2,2-dimethyl-3-lauroyloxypropanal. Particularly preferred are 2,2-dimethyl-3-(N-morpholino)-propanal, 2,2-dimethyl-3-acetoxypropanal, and 2,2-dimethyl-3-lauroyloxypropanal.

Particularly preferred hydrophobic aldimines of the formula (I) are selected from the group consisting of N,N'-bis(2,2-dimethyl-3-(N-morpholino)-propylidene)-polyoxypropylenediamines with an average molecular weight in the range from 1,300 to 4,400 g/mol, N,N'-bis(2,2-dimethyl-3-acetoxypropylidene)-polyoxypropylenediamines with an average molecular weight in the range from 1,300 to 4,400 g/mol, N,N'-bis(2,2-dimethyl-3-lauroyloxypropylidene)-polyoxypropylenediamines with an average molecular weight in the range of 1,500 to 4,600 g/mol, N,N',N"-tris(2,2-dimethyl-3-(N-morpholino)-propylidene)-polyoxypropylenetriamines with an average molecular weight in the range of 3,000 to 4,000 g/mol, N,N',N"-tris(2,2-dimethyl-3-acetoxypropylidene)-polyoxypropylenetriamines with an average molecular weight in the range of 3,300 to 4,300 g/mol, and N,N',N"-tris(2,2-dimethyl-3-lauroyloxypropylidene)-polyoxypropylenetriamines with an average molecular weight in the range of 3,300 to 4,300 g/mol.

These hydrophobic aldimines are based on aminated polyether polyols in the form of propoxylated diols, commercially available, for example, as Jeffamine® D-2000 (from Huntsman). One-component moisture curing compositions containing such hydrophobic aldimines of formula (I) have been found to cure without releasing significant amounts of carbon dioxide and to provide low odor or odorless water-swellable sealants having excellent swelling properties, decreased tendency for shrinkage in dry conditions and good mechanical stability.

Preferably, the total amount of the latent hardeners in the one-component moisture curing composition is such that the ratio between the total number of isocyanate-reactive groups of the latent hardeners to the total number of isocyanate groups is in the range from 0.3 to 1.0, more preferably from 0.4 to 0.9, most preferably from 0.5 to 0.75. In calculation of the total amount of the isocyanate-reactive groups, blocked and non-blocked reactive groups are taken into account as reactive groups of the latent hardener.

In case the one-component moisture curing composition is free of ketimines, and oxazolidines, the total content of aldimines is preferably such that the ratio between the total number of aldimino groups to the total number of isocyanate groups is in the range of 0.3 to 1.0, more preferably 0.4 to 0.95, most preferably 0.5 to 0.9. One-component moisture curing compositions having the total content of aldimines in the above cited ranges have been found to provide water-swellable sealants with superior swelling and mechanical properties.

Besides the ingredients already mentioned, the one-component moisture curing composition can comprise further components.

The one-component moisture curing composition preferably comprises a filler, particularly calcium carbonate (chalk), barium sulfates (barytes), slate, silicates (quartz), magnesiosilicates (talc) and alumosilicates (clay, kaolin). These fillers may or may not carry a surface coating, e.g. a stearate or a siloxane coating. Such fillers can increase strength and durability of thewater-swellable sealant.

The one-component moisture curing composition preferably comprises at least one metal-based catalyst. Preferred metal-based catalysts are dialkyltin complexes, particularly dibutyltin(IV) or dioctyltin(IV) carboxylates or acetoacetonates, such as dibutyltindilaurate (DBTDL), dibutyltindiacetylacetonate, dioctyltindilaurate (DOTDL), further bis-muth(III) complexes such as bismuthoctoate or bismuthneodecanoate, zinc(II) complexes, such as zincoctoate or zincneodecanoate, and zirconium(IV) complexes, such as zirconiumoctoate or zirconiumneodecanoate. Such catalysts can accelerate the reaction of the isocyanate groups.

The one-component moisture curing composition preferably comprises at least one acid catalyst. Preferred acid catalysts are carboxylic acids and sulfonic acids, particularly aromatic carboxylic acids such as benzoic acid or salicylic acid. Such catalysts can accelerate the hydrolysis of aldimino groups.

The one-component moisture curing composition preferably comprises at least one pigment. Preferred pigments are titanium dioxide, iron oxides and carbon black. The pigment defines the color of the sealant, helps to develop strength and can improve durability, particularly UV-stability.

The one-component moisture curing composition may comprise at least one polyisocyanate crosslinker. Preferred polyisocyanate crosslinkers are oligomers and similar derivatives from diisocyanates such as MDI, TDI, HDI and IPDI. Preferred aliphatic polyisocyanate crosslinkers are HDI-biurets, such as Desmodur® N 100 and N 3200 (from Covestro), Tolonate® HDB and HDB-LV (from Vencorex) and Duranate® 24A-100 (from Asahi Kasei); HDI-isocyanurates, such as Desmodur® N 3300, N 3600 and N 3790 BA (from Covestro), Tolonate® HDT, HDT-LV and HDT-LV2 (from Vencorex), Duranate® TPA-100 and THA-100 (from Asahi Kasei) and Coronate® HX (from Nippon Polyurethane); HDI-uretdiones such as Desmodur® N 3400 (from Covestro); HDI-iminooxadiazinediones such as Desmodur® 3900 (from Covestro); HDI-allophanates such as Desmodur® VP LS 2102 (from Coverstro) and Basonat® HA 100, HA 200 and HA 300 (from BASF); IPDI-isocyanurates such as Desmodur® Z 4470 (from Covestro) and Vestanat® T1890/100 (from Evonik); mixed isocyanurates based on IPDI/HDI, such as Desmodur® NZ 1 (from Covestro). Preferred aromatic polyisocyanate crosslinkers are TDI-oligomers such as Desmodur® IL (from Covestro); modified MDI containing carbodiimides or uretonimines of MDI such as the already mentioned ones; polymeric MDI or PMDI such as the already mentioned ones as well as Desmodur® VL, VL R10, VL R20 (from Covestro), Voranate® M 220, M 229 and M 580 (from Dow) or Lupranate® M 10 R, M 20 S, M 50, M 70 R, and M 200 R (from BASF). Mixed aromatic/aliphatic polyisocyanate crosslinkers may also be used, in particular isocyanurates based on TDI/HDI, such as Desmodur® HL (from Covestro).

Aliphatic polyisocyanate crosslinkers are particularly preferred in one-component compositions containing aliphatic isocyanate-functional polyurethane polymers. Particularly preferred are IPDI-isocyanurates and mixed isocyanurates containing IPDI.

Aromatic polyisocyanate crosslinkers are particularly preferred in one-component compositions containing aromatic isocyanate-functional polyurethane polymers.

When using such further ingredients it is advantageous to ensure that they do not strongly impair the shelf life stability of the one-component moisture curing composition, i.e. do not massively trigger reactions leading to crosslinking of the prepolymer during storage. In particular these further ingredients should not contain any water above trace quantities. It can be advantageous to dry ingredients physically or chemically before use.

The one-component moisture-curing composition may be prepared by mixing all ingredients under exclusion of moisture to obtain a homogeneous paste. It may be stored in a suitable moisture-tight container, particularly a bucket, a drum, a hobbock, a bag, a sausage, a cartridge, a can or a bottle.

Another subject of the present invention is a method of sealing comprising steps of:
i) applying a one-component moisture curing composition according to the present invention to between substrates S1 and S2,
ii) curing the composition by contact with moisture to form a water-swellable sealant between the substrates S1 and S2, the substrates being of same material or of different material.

The curing of the one-component composition starts when it gets in contact with moisture, typically atmospheric moisture. The curing process works by chemical reaction. The blocked reactive groups of the latent hardener are activated with moisture and then react with isocyanate groups. In case the latent hardener is an aldimine, each aldimino group forms a primary amino group on activation. Furthermore, the isocyanate groups can also react directly with moisture. As a result of these reactions, the composition cures to a water-swellable material, which is a solid, elastic material with a capability to absorb and retain water. The curing process may also be called crosslinking. When contacted with water, the volume of the water-swellable material is increased due to the absorbed water and a swelling pressure is exerted on the surrounding surfaces, which results in further sealing of the space between the substrates against water penetration.

In the course of the curing reaction, the blocking agents of the latent hardeners are released. These blocking agents, depending on their volatility and other factors such as their solubility in the one-component moisture curing composition, may evaporate from the composition during or after curing, or may remain in the cured composition. In the case of aldimines of the formula (I), the released aldehydes are of low odor and of good compatibility with the polyurethane matrix of the one-component composition. Particularly 2,2-dimethyl-3-(N-morpholino)propanal has an excellent compatibility with the polyurethane matrix, and particularly 2,2-dimethyl-3-lauroyloxypropanal is odorless and remains almost completely in the composition, reducing odor, emission and shrinkage of the water swellable sealant.

Preferably, the water-swellable sealant has a water-absorption capacity of at least 2.5 % by weight. The term "water-absorption capacity" refers in this document to the amount of water in weight percentage that the sealant is able to absorb while being stored immersed in water at a temperature of ca. 23 °C for a period of four days, the proportion being based on the weight of the sealant excluding the amount of the absorbed water. In particular, the water-swellable sealant can have a water absorption capacity of at least 5.0 % by weight, preferably at least 10.0 % by weight, most preferably at least 20.0 % by weight of water. Preferably, the water-swellable sealant has a water absorption capacity of not more than 500.0 % by weight, more preferably not more than 300 % by weight, most preferably not more than 200 % by weight.

Still another subject of the present invention is a sealed article produced by using the method of sealing according to the present invention.

Preferably the article is a built structure in construction or civil engineering or a part thereof.

## Claims

1. A one-component moisture curing composition comprising:
a) at least one hydrophilic isocyanate-functional polyurethane polymer,
b) at least one inorganic swelling agent selected from the group consisting of aluminum sulfate and magnesium sulfate, and
c) at least one latent hardener.

2. The one-component moisture curing composition according to claim 1, wherein the at least one hydrophilic isocyanate-functional polyurethane polymer has a content of ethylene oxide units of at least 30 % by weight, preferably at least 40 % by weight, more preferably at least 50 % by weight, based on the weight of the polyurethane polymer.

3. The one-component moisture curing composition according to claim 1 or 2, wherein the at least one hydrophilic isocyanate-functional polyurethane polymer is present in an amount of 5 - 90 % by weight, preferably 10 - 80 % by weight, preferably 20 - 50 % by weight, based on the total weight of the composition.

4. The one-component moisture curing composition according to any of previous claims further comprising at least one hydrophobic isocyanate-functional polyurethane polymer.

5. The one-component moisture curing composition according to claim 5, wherein the at least one hydrophobic isocyanate-functional polyurethane polymer is present in an amount of 10 - 90 % by weight, preferably 30 - 80 % by weight, preferably 50 - 70 % by weight, based on the total weight of the composition.

6. The one-component moisture curing composition according to any of previous claims, wherein the at least one inorganic swelling agent is present in an amount of 0.5 - 35.0 % by weight, more preferably 2.5 - 30.0 % by weight, most preferably 5.0 - 20.0 % by weight, based on the total weight of the one-component composition.

7. The one-component moisture curing composition according to any of previous claims, wherein the latent hardener is a blocked amine comprising at least two blocked, hydrolytically activatable amine groups.

8. The one-component moisture curing composition according to any of previous claims, wherein the latent hardener is a hydrophobic aldimine of formula (I); 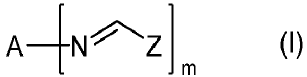 wherein
m is 2 or 3,
A is a divalent or trivalent hydrocarbon moiety having an average molecular weight in the range from 200 to 10,000 g/mol, optionally containing ether groups,
Z is a substituted or unsubstituted aromatic moiety or is a moiety of formula 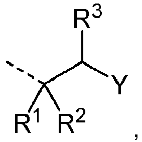 wherein
R¹ and R² independently of one another are each a monovalent hydrocarbon moiety having 1 to 12 C atoms; or
together form a divalent hydrocarbon moiety having 4 to 12 C atoms, which is part of a substituted or unsubstituted carbocyclic ring having 5 to 8 C atoms; and
R³ is a hydrogen atom or alkyl- or arylalkyl- or alkoxycarbonyl-moiety having 1 to 12 C atoms; and
Y is a monovalent moiety of formulae 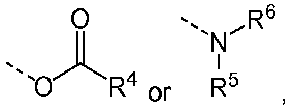 wherein
R⁴ is a hydrogen or a monovalent hydrocarbon moiety having 2 to 20 C atoms optionally containing ether, carbonyl or ester groups, and
R⁵ and R⁶ independently of one another are each monovalent aliphatic, cycloaliphatic, or arylaliphatic hydrocarbon moieties having 1 to 20 C atoms optionally containing heteroatoms in the form of hydroxyl groups or ether oxygen; or together form a divalent hydrocarbon moiety having 4 to 12 C atoms, which is part of a 5- to 8-membered substituted or unsubstituted heterocyclic ring which, in addition to the nitrogen atom, may contain other heteroatoms in the form of ether oxygen, thioether sulphur, or tertiary amine nitrogen.

9. The one-component moisture curing composition according to claim 8, wherein
Z is a moiety of formula 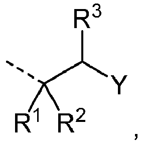 wherein
R¹ and R² are methyl moieties, R³ is a hydrogen, and
Y is a moiety of formula 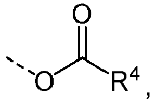 wherein
R⁴ is a hydrogen or a monovalent hydrocarbon moiety having 6 to 20 C atoms; or
Y is a moiety of formula 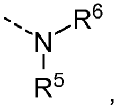 wherein
R⁵ and R⁶ form are each methoxyethyl group or form together a 3-oxa-1,5-pentylene moiety, which together with the nitrogen atom form a morpholine ring or a 2,6-dimethylmorpholine ring.

10. The one-component moisture curing composition according to claim 8 or 9, wherein A is a two or three valent polyoxyalkylene moiety having an average molecular weight in the range from 200 to 6,000 g/mol and a carbon to oxygen ratio of at least 4:1, preferably at least 5:1.

11. The one-component moisture curing composition according to any of claims 8-10, wherein the hydrophobic aldimine of formula (I) has a content of ethylene oxide units of not more than 25 % by weight, preferably not more than 15 % by weight, most preferably not more than 10 % by weight, based on the weight of the aldimine.

12. The one-component moisture curing composition according to any of previous claims, wherein the total content of latent hardeners is such that the ratio between the total number of isocyanate-reactive groups of the latent hardeners to the total number of isocyanate groups in the composition is in the range of 0.3 to 1.0, more preferably 0.4 to 0.9.

13. A method of sealing comprising steps of:
i) applying a composition according to any of claims 1-12 to between substrate S1 and S2,
ii) curing the composition by contact with moisture to form a water-swellable sealant between the substrates S1 and S2, the substrates being of same material or of different material.

14. A sealed article produced by using the method according to claim 13.

15. The sealed article according to claim 14, wherein the article is a built structure in construction or civil engineering or a part thereof.
